# EUROPÄISCHE PATENTSCHRIFT

(11) **EP 0 303 024 B1**
(45) Veröffentlichungstag und Bekanntmachung des Hinweises auf die Patenterteilung: **20.01.1993**
(21) Anmeldenummer: 88109627.5
(22) Anmeldetag: 16.06.1988
(51) Int. Cl.: G02B 6/38, G02B 6/42, C03B 37/16, G02B 6/36

(54) **Lichtleiteranschlussklemme**
Light-guide binding post
Plot de raccordement pour des guides d'ondes lumineuses

(30) Priorität: 14.08.1987 DE 3727092
(43) Veröffentlichungstag der Anmeldung: 15.02.1989
(73) Patentinhaber: F. Wieland Elektrische Industrie GmbH, 96052 Bamberg (DE)
(72) Erfinder: Schrauder, Franz, D-8602 Litzendorf (DE)
(74) Vertreter: Matschkur, Götz, Lindner Patent- und Rechtsanwälte

(56) Entgegenhaltungen:
- EP-A- 0 189 323
- EP-A- 0 224 806
- WO-A-87/03969
- DE-A- 3 223 121
- DE-A- 3 313 835
- DE-C- 3 208 736

## Beschreibung

Die Erfindung bezieht sich auf eine Lichtleiteranschlußklemme für Lichtleiter mit einer Einrichtung zur Bildung einer definiert in der Ebene einer Austrittsöffnung liegenden Stirnfläche des Lichtleiterendes, wobei die Lichtleiteranschlußklemme ein die Austrittsöffnung und eine davon beabstandete Schneide enthaltendes Führungsgehäuse und ein darin zwischen einer Betriebsstellung für das Lichtleiterende und seiner Montagestellung verschiebbares, eine Durchgangsausnehmung zur Aufnahme und Halterung für das Lichtleiterende aufweisendes Einsatzgehäuse aufweist.

Lichtleiteranschlußklemmen zur definierten Halterung eines Lichtleiters, bzw. zur Verbindung zweier Lichtleiter, sind bereits in den verschiedensten Ausführungsformen bekanntgeworden. Neben Anordnungen, bei denen ein Gehäuse zur Aufnahme der Lichtleiter gegenüber einem zweiten Gehäuse verdreht wird um das Abschneiden der Lichtleiterenden zu bewerkstelligen, (Offenlegungsschrift DE 32 23 121 A1) wurde auch bereits eine Lichtleiterverbindungsklemme vorgeschlagen bei der zur Verbindung der beiden Lichtleiter deren Enden mit Hilfe eines ein Halterungsgehäuse quer durchsetzenden Schneidstempels abgetrennt werden (Patentschrift DE 32 08 736 C1). Diese Verbindungsklemme erfordert jedoch neben einem relativ komplizierten Aufbau des gesamten Gehäuses ein vorheriges Abisolieren der Lichtleiter.

Darüber hinaus ist in der Patentschrift DE 33 13 835 C2 auch bereits eine Lichtleiteranschlußklemme der eingangs genannten Art vorgeschlagen worden, mit deren Hilfe ein Lichtleiterende mit einer definiert abgeschnittenen Stirnkante in einem Gehäuse gehaltert wird, so daß er dann einer irgendwie gearteten optoelektrischen Einrichtung gegenüber definiert positioniert werden kann.

Die Anordnung nach der genannten Patentschrift 33 13 835 hat dabei zunächst den Nachteil, daß sie außerordentlich kompliziert aufgebaut ist, insbesondere das Einsatzgehäuse als spezielles Klemmgehäuse mit gegeneinander beweglichen Flügeln ausgebildet ist, um Lichtleiter unterschiedlichen Durchmessers klemmend haltern zu können. Hinzu kommt dabei die Schwierigkeit, daß wegen der das Einsatzgehäuse in der Betriebsstellung und in Montagestellung ausrichtenden Rippen eine sehr starke Deformation des Einsatzgehäuses notwendig ist, die das Eindrücken des Einsatzgehäuses, während der ja das Abschneiden des Lichtleiterendes stattfinden soll, erheblich erschwert. Hinzu kommt noch, daß ja auch das Abschneiden des Lichtleiterendes, insbesondere bei dikkeren Lichtleitern, einen erheblichen Kraftaufwand erfordert, so daß insgesamt eine Lichtleiteranschlußklemme gemäß der Patentschrift 33 13 835 in der Praxis doch erhebliche Schwierigkeiten bereitet. Hinzu kommt, daß eine solche Klemme wegen des besonderen Aufbaus des Führungsgehäuses sehr groß ist und damit sehr viel Platz benötigt, was den Einsatz in Schaltschränken mit einer Vielzahl von Lichtleiteranschlüssen erschwert.

Der Erfindung liegt daher die Aufgabe zugrunde, eine Lichtleiteranschlußklemme der eingangs genannten Art so auszugestalten, daß sie bei einfacherem und kleinräumigerem Aufbau leichter bedienbar ist und darüber hinaus auch einen einfachen Ausbau zu einer Lichtleiterverbindungsklemme gestattet.

Zur Lösung dieser Aufgabe ist erfindungsgemäß vorgesehen, daß das kastenförmig ausgebildete Führungsgehäuse einen das als quaderförmiger Kulissenstein mit einer Durchgangsbohrung ausgebildete Einsatzgehäuse umfassenden Führungskanal aufweist, in dessen die Austrittsöffnung enthaltender Seitenwand die Schneide liegt und in dessen der Austrittsöffnung gegenüberliegender Seitenwand ein Längsschlitz für das Lichtleiterende vorgesehen ist und daß das Einsatzgehäuse mittels einer Stellschraube im Führungskanal zwischen der Montagestellung und der Betriebsstellung verschiebbar ist.

Durch die erfindungsgemäße Ausbildung ergibt sich ein kleinräumiger Aufbau einer Lichtleiteranschlußklemme, der sich nicht nur einfach in ein äußeres, vorzugsweise aus Kunststoff bestehendes Gehäuse integrieren läßt, sondern bei dem auch die Verstellung des Einsatzgehäuses sehr viel einfacher und exakter möglich ist als bei der vorbeschriebenen Anordnung. Durch das Vorsehen einer Verstellschraube erfolgt das Anschließen eines Lichtleiterendes in gleicher Weise, wie das den Fachleuten bisher bekannte Anklemmen einer elektrischen Leitung mit Hilfe einer Klemmschraube. Von ganz besonderer Bedeutung ist in diesem Zusammenhang, daß durch die Steigungsübersetzung einer solchen Verstellschraube die Schneidkraft sehr viel leichter aufgebracht werden kann, als wenn man das Einsatzgehäuse von Hand in das Führungsgehäuse hineindrücken muß, noch dazu, wenn dabei eine sehr starke Deformierung des Einsatzgehäuses notwendig ist, wie bei der beschriebenen Patentschrift 33 13 835. Um die Vergleichbarkeit mit bekannten Klemmen für elektrische Leiter noch zu vervollkommnen und damit auf eingeführte Gewohnheiten Rücksicht zu nehmen, kann die Stellschraube auch mit einem Linksgewinde versehen sein, so daß das Lichtleiterende durch eine Rechtsdrehung der Stellschraube von der Betriebsstellung in die Montagestellung verbracht wird.

Die Halterung des Lichtleiterendes derart, daß es sich beim Vorbeibewegen an der Schneide nicht innerhalb der Durchgangsbohrung des Einsatzgehäuses verschieben kann, kann dabei in Weiterbildung der Erfindung sehr einfach in der Weise erfolgen, daß die Begrenzungskanten des Längsschlitzes als - zum Einschneiden in den Isoliermantel des Lichtleiters dienende - Schneiden ausgebildet sind. Durch diese Ausbildung ist zur Längsfixierung des Lichtleiterendes in der Durchgangsbohrung des Einsatzgehäuses eine erheblich geringere Kraft erforderlich als bei der beschriebenen Deformierung des kompliziert ausgebildeten Einsatzgehäuses gemäß der Patentschrift DE 33 13 835 C2. Hinzu kommt noch der entscheidende Vorteil, daß bei dieser Art des teilweisen Einschneidens in den Isoliermantel auch keinerlei Deformation der Lichtleiterfasern im Inneren stattfindet, was bei Lichtleiteranschlußklemmen tunlichst vermieden werden sollte.

Gemäß einer zweiten Ausführungsform der vorliegenden Erfindung kann auch vorgesehen sein, daß bei der in jedem Fall zweckmäßigen Ausbildung des Führungsgehäuses aus starrem, druck- und biegefestem Material, insbesondere Metall, und einer Ausbildung des Einsatzgehäuses aus elastisch deformierbarem Material, beispielsweise Kunststoff, der Führungskanal des Führungsgehäuses sich - unter Deformierung des Einsatzgehäuses zur Einklemmung des Lichtleiterendes - in Richtung zur Betriebsstellung hin verjüngt.

Diese Art der Klemmhalterung des Lichtleiterendes unterscheidet sich von der Backenverklemmung der bereits mehrfach angesprochenen Patentschrift 33 13 835 C2 in mehrfacher Hinsicht. Zum einen erfolgt keine Backenverklemmung, bei der eine sehr viel stärkere Deformierung des Lichtleiters möglich ist, sondern das Lichtleiterende ist ja in einer ihn allseitig umfassenden Bohrung gehaltert, so daß eine leichte Deformierung des Außenmantels zur Verklemmung ausreicht, da ja gleichzeitig dann in der Querrichtung dazu der Isoliermantel sich an der Innenwand der Bohrung abstützt, was bei einer Backenverklemmung nicht der Fall ist. Hinzu kommt, daß durch die Verjüngung des Führungskanals die maximal aufzuwendende Kraft zur Verstellung des Führungsgehäuses wesentlich geringer ist als bei der vorbekannten Klemme, bei der die Rippen beim Ausrasten aus Führungsrinnen schlagartig auf einen sehr viel feineren Durchmesser verdrückt werden müssen, wozu erhebliche Druckkräfte erforderlich sind. Damit ist die Betätigung einer erfindungsgemäßen Lichtleiteranschlußklemme auch vom Kraftaufwand der Bedienungsperson her - ganz abgesehen davon, daß diese Kraft ja durch die Stellschraube sehr viel einfacher aufgebracht werden kann - sehr viel einfacher.

Insbesondere im Falle der Ausbildung der Begrenzungskanten des Längsschlitzes als Schneiden zur verschiebungsfreien Halterung des Lichtleiterendes ist in Ausgestaltung der Erfindung vorgesehen, daß der Längsschlitz im Bereich der Montagestellung des Lichtleiterendes eine keilförmige Führungserweiterung aufweist. Diese keilförmige Führungserweiterung ermöglicht ein sehr einfaches Einstecken des Lichtleiterendes, das zunächst ja überhaupt noch keine Berührung mit den Kanten des Längsschlitzes aufweist. Beim Verstellen des Einsatzgehäuses mit Hilfe der Stellschraube in Richtung zur Montagestellung dringen die keilförmig, sich verjüngenden Schneiden allmählich und damit ruck- und verschiebefrei in den Isoliermantel des Lichtleiterendes ein.

Um die Betätigung einer erfindungsgemäßen Lichtleiteranschlußklemme noch weiter zu vereinfachen, kann gemäß einem weiteren Merkmal der vorliegenden Erfindung vorgesehen sein, daß das Führungsgehäuse im Bereich der am einen Ende angeordneten Montagestellung des Lichtleiterendes zur Bildung eines Aufnahmeraums für ein die Schneide bildendes Messer, sowie zur Bildung eines Einsteckbegrenzungsanschlags für das Lichtleiterende nach außen gestuft verbreitert ist. Auf diese Weise reicht es aus, wenn die Bedienungsperson das Lichtleiterende in die vorbereitete, in der Aufnahmestellung befindliche Lichtleiteranschlußklemme einfach in der Weise einsetzt, daß das Lichtleiterende in die Durchgangsbohrung des Einsatzgehäuses bis zum Anschlag eingeschoben und anschließend die Klemmschraube betätigt wird. Weitere Justierarbeiten oder besondere Überlegungen, um das gewünschte Ergebnis zu erzielen, sind nicht erforderlich. Beim Abschneiden des Lichtleiterendes fällt der in diesem Fall sehr kurz haltbare Endabschnitt des Lichtleiters durch die untere Öffnung des Führungskanals einfach heraus.

Zur weiteren Erhöhung des bereits angesprochenen Bedienungskomforts einer erfindungsgemäßen Lichtleiteranschlußklemme soll die frei drehbar mit dem Einsatzgehäuse verbundene Stellschraube so bemessen sein, daß ihre beiden Endstellungen die Betriebsstellung bzw. Montagestellung des Einsatzgehäuses ergeben, so daß durch Verstellen jeweils auf einen der Endpunkte der Stellschraube automatisch die beiden Positionen erhalten werden und auch hier keine besondere Sorgfalt und Überlegung durch das Bedienungspersonal erforderlich ist.

Dabei hat es sich als zweckmäßig erwiesen, daß die Stellschraube am Verbindungsende zum Einsatzgehäuse mit einem gewindefreien, ein Überdrehen der Schraube beim Hochziehen in die Montagestellung verhindernden Abschnitt versehen ist.

Die erfindungsgemäße Lichtleiteranschlußklemme eignet sich auch zu einer sehr einfachen Ergänzung als Lichtleiterverbindungsklemme zur Verbindung zweier Lichtleiterenden, indem beispielsweise in einer Lichtleiteranschlußklemme zwei gegenüber einem Doppelschneidenmesser verstellbare Einsatzgehäuse angeordnet sind, wobei in der Mitte des Messers ein lichtdurchlässiger Abschnitt vorgesehen ist,, so daß nach dem Verschieben in die Montagestellung, in der die beiden Lichtleiterenden miteinander fluchten, ein optischer Kontakt durch diesen lichtdurchlässigen Abschnitt vorgesehen ist. Der lichtdurchlässige Abschnitt kann dabei sowohl eine Durchbrechung des Messers sein, oder aber auch vorteilhafterweise dadurch erzielt werden, daß das Doppelschneidenmesser aus durchsichtigem Werkstoff besteht.

Schließlich läßt sich eine Verbindungsklemme zur Verbindung zweier Lichtleiterenden mit Hilfe erfindungsgemäßer Lichtleiteranschlußklemmen auch sehr einfach dadurch erzielen, daß eine Verbindungsvorrichtung vorgesehen wird, um zwei Einzellichtleiter-Anschlußklemmen um 180° gegeneinander versetzt miteinander zu verbinden. Dies läßt sich besonders einfach dadurch erzielen, daß die beiden Lichtleiteranschlußklemmen durch ein äußeres, vorzugsweise aus Kunststoff bestehendes Gehäuse zusammengefaßt sind, wobei darüber hinaus zur Verbesserung der optischen Kopplung im Gehäuse ein die Austrittsöffnungen der Einzellichtleiter-Anschlußklemmen verbindender Lichtleiter vorgesehen sein kann.

Weitere Vorteile, Merkmale und Einzelheiten der Erfindung ergeben sich aus der nachfolgenden Beschreibung einiger Ausführungsbeispiele sowie anhand der Zeichnung. Dabei zeigen:
- Fig. 1: einen Längsschnitt durch eine erfindungsgemäße Lichtleiteranschlußklemme,
- Fig. 2: eine Ansicht der Klemme nach Fig. 1 von der Lichtleiteraustrittsseite aus,
- Fig. 3: eine um 180° versetzte Ansicht der Klemme von der Einführungsseite für das Lichtleiterende,
- Fig. 4: einen Querschnitt längs der Linie IV-IV in Fig. 1,
- Fig. 5: einen der Fig. 1, die die Montagestellung des Lichtleiterendes zeigt, entsprechenden Schnitt durch die Lichtleiteranschlußklemme in der Betriebsstellung des Lichtleiters,
- Fig. 6: eine schematische Darstellung einer Lichtleiterverbindungsklemme aus zwei Einzellichtleiter-Anschlußklemmen mit einem sie zusammenfassenden äußeren Gehäuse und
- Fig. 7: eine schematische Darstellung des Aufbaus einer Lichtleiterverbindungsklemme mit zwei gegeneinander über ein Doppelschneidenmesser verstellbaren Einsatzgehäusen.

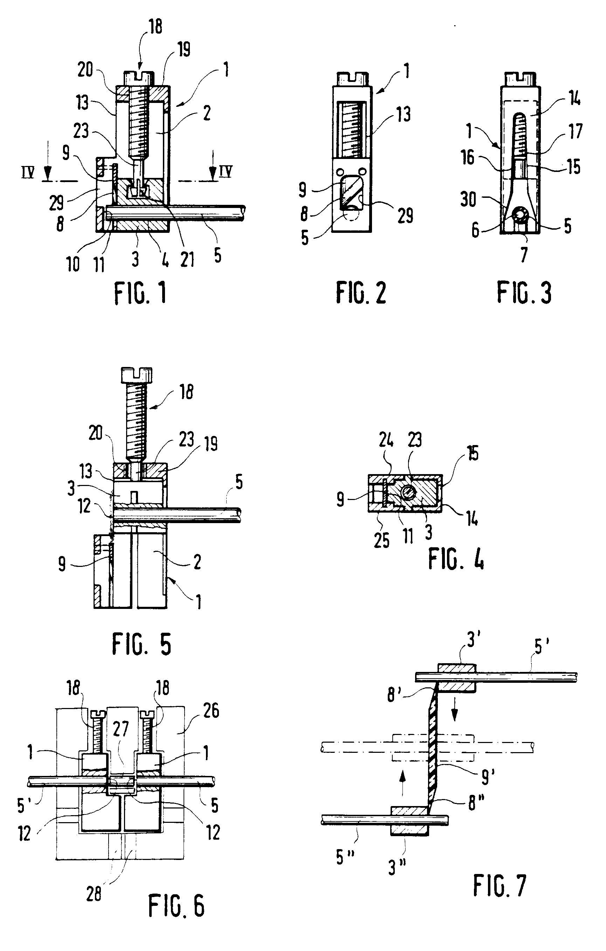

Die erfindungsgemäße in Fig. 1 bis 4 dargestellte Lichtleiteranschlußklemme umfaßt ein kastenförmiges Führungsgehäuse 1 mit einem Führungskanal 2 für einen als quaderförmiger Kulissenstein ausgebildetes Einsatzgehäuse 3, welches eine Längsbohrung 4 zur Aufnahme eines Lichtleiterendes 5 besitzt. Das Lichtleiterende 5 umfaßt dabei die eigentliche Lichtleiterseele 6, die aus mehreren Einzellichtleitern bestehen kann und einen äußeren Isoliermantel 7 aus Gummi, Kunststoff od. dgl. Das Führungsgehäuse 1 ist am unteren Ende zur Bildung eines Aufnahmeraums für ein die Schneide 8 bildendes Messer 9 sowie zur Bildung eines Einsteckbegrenzungsanschlags 10 für das Lichtleiterende 5 nach außen gestuft verbreitert. Oberhalb des Messers 9 ist die entsprechende Seitenwand des Führungsgehäuses 1 über die gesamte Breite der vorderen Stirnfläche 11 des Einsatzgehäuses 3 offen, so daß diese Stirnfläche 11 und damit auch die abgeschnittene Stirnfläche 12 des Lichtleiterendes 5 in dieser offenen Frontebene liegen, in der dann beispielsweise ein anderes optoelektrisches Bauteil angeordnet werden kann, sei es eine Lichtquelle, beispielsweise eine Leucht- oder Laserdiode oder ein lichtempfindlicher Sensor oder aber auch die Stirnfläche eines anderen Lichtleiterendes. Die der Austrittsöffnung 13 gegenüberliegende Seitenwand 14 des Führungsgehäuses ist mit einem Längsschlitz 15 versehen, dessen Begrenzungskanten 16 und 17 als zum Einschneiden in den Isoliermantel 7 des Lichtleiterendes 5 dienende Schneiden ausgebildet sind. Der Längsschlitz 15 ist dabei zum unteren Ende hin mit einer keilförmigen Führungserweiterung 30 versehen, so daß, in der in Fig. 1 gezeigten Montagestellung für das Lichtleiterende, dieser problemlos in die Durchgangsbohrung 4 des Einsatzgehäuses eingesteckt werden kann, bis er am Einsteckbegrenzungsanschlag 10 anstößt.

Das Verstellen des Einsatzgehäuses im Führungsgehäuse erfolgt mit Hilfe einer Stellschraube 18, die eine obere Deckwand 19 des Führungsgehäuses mit einer Innengewindebohrung 20 durchsetzt und mit ihrem geschlitzten Einsprengkopf 21 frei drehbar mit dem Einsatzgehäuse 3 verbunden ist. Die voll eingedrehte in Fig. 1 gezeigte Stellung entspricht der Montagestellung, in der das Lichtleiterende eingeführt wird, während die in Fig. 5 gezeigte Betriebsstellung der herausgedrehten Stellung der Stellschraube 18 entspricht. Diese Endbegrenzung wird im gezeigten Ausführungsbeispiel durch Vorsehen eines gewindefreien Abschnitts 23 am inneren Ende der Stellschraube 18 gebildet, wodurch die Stellschraube mit Erreichen der vorgesehenen Montagestellung leer läuft und gleichzeitig ein Überdrehen der Stellschraube 18 verhindert ist. Beim Hochziehen des Einsatzgehäuses 3 aus der in Fig. 1 gezeigten Montagestellung in die Betriebsstellung gemäß Fig. 5 soll das Einschneiden der als Schneiden ausgebildeten Begrenzungskanten 16, 17 des Längsschlitzes 15 in den Isoliermantel 7 des Lichtleiterendes 5 vorzugsweise bereits erfolgen, ehe das Abschneiden an der Schneide 8 des Messers 9 erfolgt, so daß beim Schneiden keine Längsverschiebungen des Lichtleiterendes mehr stattfinden können. Durch diese axial unverschiebbare Halterung des Lichtleiterendes ist es auch möglich, die großflächige Austrittsöffnung 13 vorzusehen, derart, daß unmittelbar in der Ebene dieser Austrittsöffnung ein Gegenbauteil angeordnet sein kann. Die Verschiebung des Einsatzgehäuses 3 durch die Austrittsöffnung 13 kann durch die besonders gestufte Ausbildung des Führungskanals 2 verhindert werden, wie sie in Fig. 4 dargestellt ist, wobei dort gleich zwei verschiedene Führungsanordnungen vorgesehen sind, nämlich die Stufung im Anschluß an die Stirnfläche 11 und einen Führungseingriff längs der einander gegenüberliegenden Seitenwände 24 und 25.

Die Fig. 6 zeigt schematisch eine aus zwei erfindungsgemäßen Lichtleiteranschlußklemmen zusammengesetzte Lichtleiterverbindungsklemme, wobei in einem äußeren Isoliergehäuse 26 aus Kunststoff, das vorzugsweise zweiteilig miteinander verrastbar ausgebildet ist, zwei Lichtleiteranschlußklemmen um 180° gegeneinander versetzt eingelegt sind. Zwischen den Stirnflächen 12 der beiden Lichtleiterenden 5 und 5' ist dabei zusätzlich ein die optische Kopplung verbessernder Lichtleiter 27 vorgesehen, der fest im Isoliergehäuse eingebaut ist.

In Fig. 7 ist schematisch ein Teil einer weiteren erfindungsgemäßen Lichtleiterverbindungsklemme gezeigt, bei der zwei Einsatzgehäuse 3' und 3'' in Richtung der gezeigten Pfeile mit Hilfe von Stellschrauben gegeneinander verschiebbar sind, derart, daß sie an den Schneiden 8' und 8'' eines Doppelschneidenmessers 9' vorbeibewegt werden, um in der Montagestellung (strichpunktiert eingezeichnet) miteinander zu fluchten. Durch Ausbildung entweder des Messers aus durchsichtigem Werkstoff, oder aber durch Vorsehen einer Öffnung in der Mitte erfolgt die optische Verkoppelung der beiden zueinander ausgerichteten Lichtleiterenden 5' und 5''.

Bei Vorsehen eines die Lichtleiteranschlußklemme mit einem nach unten offenen Führungskanal umgebenden Gehäuses 26 wie in Fig. 6 müssen selbstverständlich Gehäuseaustrittsöffnungen 28 vorgesehen sein, durch welche die abgeschnittenen Endabschnitte des Lichtleiters 5 nach unten herausfallen können, da ja in diesem Fall ein Herausfallen aus der Öffnung 29 nicht möglich ist, da diese Öffnungen einander zugekehrt und durch die jeweils andere Lichtleiteranschlußklemme verdeckt sind.

In Fig. 6 wäre es auch denkbar, die beiden Lichtleiterklemmen soweit voneinander entfernt in das Kunststoffgehäuse einzusetzen, daß die Öffnung 29 frei bleibt und der abgeschnittene Teil des Lichtleiterendes durch diese hindurch und eine entsprechende Öffnung im Kunststoffgehäuse herausfallen kann. Die dafür notwendige Verlängerung beeinträchtigt den Lichtdurchgang dabei nicht.

## Patentansprüche

1. Lichtleiteranschlußklemme für Lichtleiter mit einer Einrichtung zur Bildung einer definiert in der Ebene einer Austrittsöffnung liegenden Stirnfläche des Lichtleiterendes, wobei die Lichtleiteranschlußklemme ein die Austrittsöffnung und eine davon beabstandete Schneide enthaltendes Führungsgehäuse und ein darin zwischen einer Betriebsstellung für das Lichtleiterende und seiner Montagestellung verschiebbares, eine Durchgangsausnehmung zur Aufnahme und Halterung für das Lichtleiterende aufweisendes Einsatzgehäuse aufweist, dadurch gekennzeichnet, daß das kastenförmig ausgebildete Führungsgehäuse (1) einen das als quaderförmiger Kulissenstein mit einer Durchgangsbohrung (4) ausgebildete Einsatzgehäuse (3) umfassenden Führungskanal (2) aufweist, in dessen die Austrittsöffnung (13) enthaltender Seitenwand die Schneide (8) liegt und in dessen der Austrittsöffnung (13) gegenüberliegender Seitenwand (14) ein Längsschlitz (15) für das Lichtleiterende (5) vorgesehen ist und daß das Einsatzgehäuse (3) mittels einer Stellschraube (18) im Führungskanal zwischen der Montagestellung und der Betriebsstellung verschiebbar ist.

2. Lichtleiteranschlußklemme nach Anspruch 1, dadurch gekennzeichnet, daß die Begrenzungskanten (16, 17) des Längsschlitzes (15) als - zum Einschneiden in den Isoliermantel (7) des Lichtleiterendes (5) dienende - Schneiden ausgebildet sind.

3. Lichtleiteranschlußklemme nach Anspruch 2, dadurch gekennzeichnet, daß der Längsschlitz (15) am unteren Ende im Bereich der Einsatzstellung des Lichtleiterendes eine keilförmige Führungserweiterung (17) aufweist.

4. Lichtleiteranschlußklemme nach einem der Ansprüche 1 bis 3, dadurch gekennzeichnet, daß das Führungsgehäuse (1) am unteren Ende zur Bildung eines Aufnahmeraums für ein die Schneide (8) bildendes Messer (9) sowie zur Bildung eines Einsteckbegrenzungsanschlags (10) nach außen gestuft verbreitert ist.

5. Lichtleiteranschlußklemme nach einem der Ansprüche 1 bis 4, dadurch gekennzeichnet, daß das Führungsgehäuse (1) aus einem starren, druck- und biegefesten Material, insbesondere Metall, und das Einsatzgehäuse (3) aus elastisch deformierbarem Material, insbesondere Kunststoff, bestehen.

6. Lichtleiteranschlußklemme nach Anspruch 5, dadurch gekennzeichnet, daß der Führungskanal (2) des Führungsgehäuses (1) sich - unter Deformierung des Einsatzgehäuses (3) zur Einklemmung des Lichtleiterendes (5) - in Richtung zur Betriebstellung hin verjüngt.

7. Lichtleiteranschlußklemme nach einem der Ansprüche 1 bis 6, dadurch gekennzeichnet, daß die frei drehbare mit dem Einsatzgehäuse (39 verbundene Stellschraube (18) so bemessen ist, daß ihre beiden Endstellungen die Montagestellung bzw. die Betriebsstellung des Einsatzgehäuses (3) ergeben.

8. Lichtleiteranschlußklemme nach einem der Ansprüche 1 bis 7, dadurch gekennzeichnet, daß die Stellschraube (18) am Verbindungsende zum Einsatzgehäuse (39) einen gewindefreien - die Gewindestellung bestimmenden und gleichzeitig ein Überdrehen der Schraube beim Hochziehen des Einsatzgehäuses (3) in die Betriebsstellung verhindernden - Abschnitt (23) aufweist.

9. Lichtleiterverbindungsklemme nach einem der Ansprüche 1 bis 8, dadurch gekennzeichnet, daß die Stellschraube (18) sowie das Muttergewinde im Führungsgehäuse (1) ein Linksgewinde besitzen.

10. Lichtleiterverbindungsklemme zum Verbinden zweier Lichtleiter, gekennzeichnet durch zwei Lichtleiteranschlußklemmen nach einem der Ansprüche 1 bis 9 und einer Verbindungsvorrichtung zur um 180° versetzten Verbindung der Lichtleiter-Anschlußklemmen, wobei die Verbindungsvorrichtung aus einem äußeren, vorzugsweise aus Kunststoff bestehenden Gehäuse (26) besteht.

11. Lichtleiterverbindungsklemme nach Anspruch 10, dadurch gekennzeichnet, daß im Gehäuse ein die Austrittsöffnungen der Einzellichtleiter-Anschlußklemmen verbindender Lichtleiter vorgesehen ist.

## Claims

1. A light-guide binding post for light-guides with a device for forming an end face of the light-guide end lying precisely in the plane of an outlet opening, the light-guide binding post comprising a guide housing containing the outlet opening and a cutting edge arranged at a distance from said opening and an insert housing, which is displaceable within the guide housing between an operative position for the light-guide end and its assembly position and comprises a through-recess for receiving and holding the light-guide end, characterised in that the box-shaped guide housing (1) comprises a guide duct (2), which contains the insert housing (3) formed as a square sliding block with a through-bore (4) and in whose side wall (14) opposite the outlet opening (13) an elongated slot (15) is provided for the light guide end (5), and that the insert housing (3) is displaceable in the guide duct by means of an adjusting screw (18) between the assembly position and the operative position.

2. A light-guide binding post according to Claim 1, characterised in that the limiting edges (16,17) of the elongated slot (15) are designed as cutting edges for cutting into the insulating casing (7) of the light-guide end (5).

3. A light-guide binding post according to Claim 2, characterised in that, at the lower end in the region of the insertion position of the light-guide end, the elongated slot (15) comprises a wedge-shaped guide enlargement (17).

4. A light-guide binding post according to one of Claims 1 to 3, characterised in that the guide housing (1) is enlarged at its lower end by an outwardly stepped section to form a receiving chamber for a blade (9) forming the cutting edge (8) and to form an insertion-limiting abutment (10).

5. A light-guide binding post according to one of Claims 1 to 4, characterised in that the guide housing (1) is made of a rigid, pressure- and bending-resistant material, more particularly metal, and the insert housing (3) is made of an elastically deformable material, more particularly plastics material.

6. A light-guide binding post according to Claim 5, characterised in that the guide duct (2) of the guide housing (1) narrows in the direction of the operative position, thereby deforming the insert housing (3) in order to clamp the light guide end (5).

7. A light-guide binding post according to one of Claims 1 to 6, characterised in that the adjusting screw (18) freely rotatably connected with the insert housing (3 ) is dimensioned in such a manner that its two end positions provide the assembly position and operative position respectively of the insert housing.

8. A light-guide binding post according to one of Claims 1 to 7, characterised in that, at the end where is it connected with the insert housing (3 ), the adjusting screw (18) comprises a non-threaded section (23), which determines the thread position and at the same time prevents overwinding of the screw when the insert housing (3) is raised into the operative position.

9. A light-guide connecting post according to one of Claims 1 to 8, characterised in that the adjusting screw (18) and the nut thread in the guide housing (1) comprises a left-hand thread.

10. A light-guide connecting post for connecting two light-guides, characterised by two light-guide binding posts according to Claims 1 to 9 and a connecting device for a connection of the light-guide binding posts offset through 180°, the connecting device comprising an outer housing (26) preferably made of plastics material.

11. A light guide connecting post according to Claim 10, characterised iin that a light-guide connecting the outlet openings of the individual light-guide binding posts is provided.

## Revendications

1. Borne de raccordement pour guide de lumière comportant un dispositif pour former une surface frontale, qui se situe de façon définie dans le plan d'une ouverture de sortie, de l'extrémité du guide de lumière, la borne de raccordement pour guide de lumière comportant un boîtier de guidage, qui contient l'ouverture de sortie et un tranchant distant de cette ouverture, et un boîtier formant insert qui est déplaçable entre une position de service pour l'extrémité du guide de lumière et sa position de montage et comportant un évidement de traversée pour loger et retenir l'extrémité du guide de lumière, caractérisée en ce que le boîtier de guidage (1) agencé en forme de boîte possède un canal de guidage (2), qui entoure le boîtier formant insert (3) agencé sous la forme d'un coulisseau parallélépipédique comportant un passage de traversée (4), que le tranchant (8) est situé dans la paroi latérale, qui contient l'ouverture de sortie (13), de ce canal et une fente longitudinale (15) pour l'extrémité (5) du guide de lumière est prévue dans la paroi latérale (14) située à l'opposé de l'ouverture de sortie (13), et que le boîtier formant insert (3) peut être déplacé, au moyen d'une vis de réglage (18), dans le canal de guidage présent entre la position de montage et la position de service.

2. Borne de raccordement pour guide de lumière selon la revendication 1, caractérisée en ce que les bords limites (16,17) de la fente longitudinale (15) sont agencés sous la forme de tranchants - servant à mordre dans la gaine isolante (7) de l'extrémité (5) du guide de lumière.

3. Borne de raccordement pour guide de lumière selon la revendication 2, caractérisée en ce que la fente longitudinale (15) possède, à son extrémité inférieure au voisinage de la position d'insertion de l'extrémité du guide de lumière, un élargissement de guidage en forme de coin (17).

4. Borne de raccordement pour guide de lumière selon l'une des revendications 1 à 3, caractérisée en ce qu'à sa partie inférieure, le boîtier de guidage (1) s'élargit d'une manière échelonnée vers l'extérieur pour former un espace de réception pour un couteau (9) formant le tranchant (8) ainsi que pour la formation d'une butée (10) de limitation d'enfichage.

5. Borne de raccordement pour guide de lumière selon l'une des revendications 1 à 4, caractérisée en ce que le boîtier de guidage (1) est réalisé en un matériau rigide, résistant à la pression et à la flexion, notamment un métal, et que le boîtier formant insert (3) est réalisé en un matériau élastiquement déformable, notamment une matière plastique.

6. Borne de raccordement pour guide de lumière selon la revendication 5, caractérisée en ce que le canal de guidage (2) du boîtier de guidage (1) se rétrécit en direction de la position de service - tout en déformant le boîtier formant insert (3) pour coincer l'extrémité (5) du guide de lumière.

7. Borne de raccordement pour guide de lumière selon l'une des revendications 1 à 6, caractérisée en ce que la vis de réglage (18), qui peut tourner librement et est raccordée au boîtier formant insert (3 ) est dimensionnée de manière que ses deux positions d'extrémité fournissent la position de montage et la position de service du boîtier formant insert (30).

8. Borne de raccordement pour guide de lumière selon l'une des revendications 1 à 7, caractérisé en ce que la vis de réglage (18) possède, à l'extrémité de liaison avec le boîtier (3 ) de l'insert, une section non filetée (23) - qui détermine la position du filetage et empêche simultanément un vissage excessif de la vis lors du relèvement du boîtier formant insert (3) dans la position de service.

9. Borne de raccordement pour guide de lumière selon l'une des revendications 1 à 8, caractérisée en ce que la vis de réglage (18) ainsi que le taraudage ménagé dans le boîtier de guidage (1) possèdent un filetage tournant à gauche.

10. Borne de liaison pour le raccordement de deux guides de lumière, caractérisée par deux bornes de raccordement pour guides de lumière selon l'une des revendications 1 à 9 et un dispositif de liaison pour réunir, avec un décalage de 180°, les bornes de raccordement pour guides de lumière, le dispositif de liaison étant constitué par un boîtier extérieur (26), réalisé de préférence en matière plastique.

11. Borne de raccordement pour guides de lumière selon la revendication 10, caractérisée en ce que dans le boîtier est prévu un guide de lumière qui relie les ouvertures de sortie des différentes bornes de raccordement de guides de lumière individuels.
